# EUROPÄISCHE PATENTANMELDUNG

(11) **EP 4 383 131 A1**
(43) Veröffentlichungstag der Anmeldung: **12.06.2024**
(21) Anmeldenummer: 22212577.5
(22) Anmeldetag: 09.12.2022
(51) Int. Cl.: G06N 3/045, G06F 21/55

(54) **VERFAHREN ZUM SCHÜTZEN EINES EINGEBETTETEN MASCHINENLERN-MODELLS**

(71) Anmelder: Robert Bosch GmbH, 70442 Stuttgart (DE)
(72) Erfinder: Hettwer, Benjamin, 70180 Stuttgart (DE); Schorn, Christoph, 71726 Benningen Am Neckar (DE)

(57) **Zusammenfassung**

Die Erfindung betrifft ein Verfahren (100) zum Schützen eines eingebetteten Maschinenlern-Modells (200) vor wenigstens einem physikalischen Angriff, umfassend:
- Ermitteln (101) einer Überwachungseingabe (310), wobei die Überwachungseingabe (310) auf wenigstens einem Zwischenergebnis (210) des Maschinenlern-Modells (200) basiert,
- Auswerten (102) der ermittelten Überwachungseingabe (310) durch ein Überwachungssystem (300),
- Detektieren (103) des wenigstens einen physikalischen Angriffs auf Basis des Auswertens (102).

## Beschreibung

Die vorliegende Erfindung betrifft ein Verfahren zum Schützen eines eingebetteten Maschinenlern-Modells vor wenigstens einem physikalischen Angriff. Ferner bezieht sich die Erfindung auf ein Computerprogramm sowie eine Vorrichtung zu diesem Zweck.

### Stand der Technik

In Zukunft werden vernetze, intelligente Geräte Grundbaustein für eine Vielzahl von Anwendungen wie autonomes Fahren sein. Kern dieser Anwendungen sind eingebettete Machine Learning (ML) Modelle, wie tiefe neuronale Netze (DNNs), welche u. A. im Bereich Bildklassifikation zum Stand der Technik gehören.

Ferner sind im Stand der Technik Methoden bekannt, um den Schutz der eingebetteten ML-Algorithmen zu gewährleisten. So wurden bereits erfolgreiche Angriffe auf eingebettete maschinelle Lernalgorithmen demonstriert. Dabei wurden verschiedene Merkmale eines vortrainierten DNNs (d. h. Anzahl der Schichten, Aktivierungsfunktionen, Gewichte usw.) extrahiert. Eine der konkretesten Arten von Bedrohungen mit diesem Ziel sind Seitenkanalangriffe (Side-Channel Attacks), welche effektiv und schwer zu entschärfen sind. Hierbei werden physikalische Informationen wie Laufzeit, elektromagnetische Abstrahlung oder der Stromverbrauch eines Chips analysiert, um Rückschlüsse über die verarbeiteten Daten zu ziehen. Seitenkanalangriffe sind seit mehr 20 Jahren aus dem Bereich Kryptographie bekannt (s. [7], wobei die Referenzen am Ende der Beschreibung angegeben sind). In jüngster Zeit wurden auch erfolgreiche Seitenkanalangriffe auf DNNs gezeigt (s. bspw. [1]).

Eine weitere Klasse von physikalischen Angriffsvektoren aus dem Bereich Kryptographie sind die sogenannten Fehlerinjektionsangriffe (auch engl. Fault Injection Attacks bezeichnet). Dabei werden Bitflips in einem IC induziert, z. B. mittels Laser oder EM-Impulsen, wodurch ebenfalls sensible Informationen extrahiert werden können (s. [2]).

### Offenbarung der Erfindung

Gegenstand der Erfindung ist ein Verfahren mit den Merkmalen des Anspruchs 1, ein Computerprogramm mit den Merkmalen des Anspruchs 10 sowie eine Vorrichtung mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm sowie der erfindungsgemäßen Vorrichtung, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verfahren zum Schützen eines (zu schützenden) eingebetteten Maschinenlern-Modells vor wenigstens einem physikalischen Angriff.

Unter "eingebettet" kann in diesem Zusammenhang verstanden werden, dass das Maschinenlern-Modell durch ein eingebettetes System (engl. Embedded System) ausgeführt und bereitgestellt wird. Dies kann z. B. für die Integration des Maschinenlern-Modells, und damit auch des eingebetteten Systems, in ein Fahrzeug vorteilhaft sein.

Unter einem physikalischen Angriff wird insbesondere ein physikalischer Angriff auf das eingebettete System und damit auf Hardware-Ebene verstanden. Damit kann ein physikalischer Angriff im Sinne dieser Erfindung abgegrenzt werden von einem digitalen Angriff, z. B. durch eine digitale Manipulation von Daten des Maschinenlern-Modells oder seiner Eingaben. Stattdessen kann die Manipulation z. B. von außen erfolgen, bspw. durch eine Temperaturveränderung zur Erzeugung von Bitfehlern, oder es erfolgt keine Manipulation auf Datenebene, sondern lediglich eine Analyse des eingebetteten Systems und eine Beeinflussung der Eingabedaten von außen.

Das erfindungsgemäße Verfahren kann die nachfolgenden Schritte umfassen, welche vorzugsweise nacheinander und/oder wiederholt ausgeführt werden, bevorzugt während einer Operation des Maschinenlern-Modells für eine sicherheitskritische Anwendung wie eine Klassifizierung von Bildern zur Steuerung eines Fahrzeuges:
- Ermitteln einer Überwachungseingabe, wobei die Überwachungseingabe auf wenigstens einem Zwischenergebnis des Maschinenlern-Modells basiert, vorzugsweise daraus generiert wird, bevorzugt ohne Berücksichtigung des Endergebnisses des Maschinenlern-Modells,
- Auswerten der ermittelten Überwachungseingabe durch ein Überwachungssystem,
- Detektieren des wenigstens einen physikalischen Angriffs auf Basis des Auswertens.

Dies hat den Vorteil, dass zuverlässig auf einen physikalischen Angriff reagiert werden kann, aber gleichzeitig der technische Aufwand für den Schutz reduziert wird, insbesondere im Vergleich zu bekannten Gegenmaßnahmen zu physikalischen Angriffen, bei welchen sich der Flächenverbrauch eines Chips ggf. mindestens verdreifacht. Der wenigstens eine physikalische Angriff kann einen Angriff umfassen, welcher bezweckt, eine Anzahl der Schichten und/oder Aktivierungsfunktionen und/oder Gewichte des Maschinenlern-Modells zu ermitteln. Hierzu kann der Angriff bspw. physikalische Informationen wie eine Laufzeit und/oder eine elektromagnetische Abstrahlung und/oder einen Stromverbrauch des eingebetteten Systems, vorzugsweise eines Chips des eingebetteten Systems, analysieren. Dies ist insbesondere der Fall, wenn der wenigstens eine physikalische Angriff einen Seitenkanalangriff umfasst. Auch kann der wenigstens eine physikalische Angriff einen Fehlerinjektionsangriff umfassen, bei welchem Bitfehler, insbesondere Bitflips, beim eingebetteten System bzw. Chip injiziert werden.

Die vorgenannte Analyse, also das Ermitteln der Überwachungseingabe und/oder das Auswerten der ermittelten Überwachungseingabe und/oder das Detektieren des wenigstens einen physikalischen Angriffs, kann ggf. außerhalb einer Operation des Maschinenlern-Modells im Feld, also "offline" erfolgen, z. B. nicht während des Fahrens, sondern im Labor.

Vorteilhafterweise kann im Rahmen der Erfindung vorgesehen sein, dass das Überwachungssystem ein weiteres Maschinenlern-Modell aufweist, welches das Auswerten der ermittelten Überwachungseingabe durchführt, wobei vorzugsweise das weitere Maschinenlern-Modell als ein eingebettetes, neuronales Netz ausgeführt ist. Bevorzugt weist das weitere Maschinenlern-Modell rekurrente Strukturen auf. Auch kann das weitere Maschinenlern-Modell weniger Neuronen aufweisen als das zu schützende eingebettete Maschinenlern-Modell. Damit kann das weitere Maschinenlern-Modell kleiner sein als das zu schützende Modell, sodass der technische Aufwand für den Schutz reduziert wird. Das Überwachungssystem bzw. das weitere Maschinenlern-Modell kann ggf. durch das gleiche eingebettete System ausgeführt und bereitgestellt werden wie das zu schützende Maschinenlern-Modell.

Außerdem ist es ggf. vorgesehen, dass das Maschinenlern-Modell als ein neuronales Netz ausgeführt ist, vorzugsweise als ein tiefes neuronales Netz, bevorzugt trainiert für eine sicherheitskritische Anwendung bei einem Fahrzeug. Bspw. ist es möglich, dass das Maschinenlern-Modell für eine Bildklassifikation bei einem Fahrzeug trainiert ist. Hierzu kann ein eingebettetes System des Fahrzeuges das Maschinenlern-Modell ausführen und Bilddaten als Eingabe für das Maschinenlern-Modell verwenden. Die Bilddaten können dabei aus einer Erfassung durch einen Sensor, vorzugsweise Radarsensor, des Fahrzeuges resultieren. Es ist möglich, dass auf Basis einer Ausgabe des derart angewandten Maschinenlern-Modells eine Steuerung des Fahrzeuges durchgeführt wird, z. B. ein Beschleunigen und/oder Abbremsen und/oder ein Lenken des Fahrzeuges. Hierzu kann bspw. eine autonome Fahrfunktion und/oder ein Fahrerassistenzsystem die Ausgabe auswerten und die Steuerung durchführen. Das Fahrzeug ist z. B. ein Kraftfahrzeug und/oder ein Personenkraftfahrzeug und/oder ein autonomes Fahrzeug.

Es ist ferner denkbar, dass die Überwachungseingabe das wenigstens eine Zwischenergebnis und/oder zumindest eine Ausgabe einer Zwischenschicht des (zu schützenden) neuronalen Netzes umfasst. Auch ist es möglich, dass mehrere Zwischenergebnisse vorgesehen sind, welche unterschiedlichen Ausgaben unterschiedlicher Zwischenschichten des neuronalen Netzes entsprechen. Ferner kann das Ermitteln der Überwachungseingabe den nachfolgenden Schritt umfassen: Bestimmen einer Merkmalsaktivierung, vorzugsweise in der Form eines Aktivierungsvektors, wobei die Merkmalsaktivierung vorzugsweise durch eine Dimensionsreduktion, bevorzugt Summenbildung, der zumindest einen Ausgabe bestimmt wird. Dabei kann die Merkmalsaktivierung als Eingabe für ein weiteres Maschinenlern-Modell des Überwachungssystems verwendet werden.

Weiter ist im Rahmen der Erfindung denkbar, dass die jeweilige Ausgabe der Zwischenschicht mehrere Merkmalskarten umfasst, wobei die Dimensionsreduktion für die jeweilige Ausgabe den nachfolgenden Schritt umfasst: Berechnen eines Wertes, vorzugsweise Summenwertes, für jede der Merkmalskarten, welcher für die gesamte jeweilige Merkmalskarte spezifisch ist, wobei die Merkmalsaktivierung die berechneten Werte umfasst. Damit ist es möglich, dass die Merkmalsaktivierung die Merkmalskarten mit einem geringeren Datenumfang repräsentiert.

Des Weiteren ist es denkbar, dass bei dem erfindungsgemäßen Verfahren wenigstens einer der nachfolgenden Schritte vorgesehen ist:
- Detektieren eines Fehlers, vorzugsweise Bitfehlers, bei einer Ausführung des Maschinenlern-Modells auf Basis des Auswertens, wobei besonders bevorzugt eine korrigierte Ausgabe des Maschinenlern-Modells bereitgestellt wird,
- Detektieren einer Anomalie bei der Ausführung des Maschinenlern-Modells auf Basis des Auswertens,
- Detektieren einer hohen Vorhersage-Unsicherheit des (überwachten) Maschinenlern-Modells auf Basis des Auswertens.
Entsprechend kann das neuronale Netz des Überwachungssystems dafür trainiert worden sein, derartige Fehler bzw. Zustände zu detektieren.

Es ist ferner denkbar, dass basierend auf einem Ergebnis des Detektierens des wenigstens einen physikalischen Angriffs eine Gegenmaßnahme, vorzugsweise eine Beendigung einer Operation des Maschinenlern-Modells und/oder ein Sperren von Eingaben für das Maschinenlern-Modell, initiiert wird. Somit kann verhindert werden, dass der Angriff fortgeführt wird, um das Maschinenlern-Modell zu schützen.

Ferner kann auf dem eingebetteten System das Maschinenlern-Modell und vorzugsweise auch das Überwachungssystem ausgeführt werden. Dies ermöglicht eine zuverlässige Anwendung für eine sicherheitskritische Funktion bspw. eines Fahrzeuges.

Ein weiterer Vorteil im Rahmen der Erfindung ist erzielbar, wenn der wenigstens eine physikalische Angriff sowohl in der Form eines Seitenkanalangriffs als auch in der Form eines Fehlerinjektionsangriffs auf ein eingebettetes System detektiert wird. Hierzu kann das neuronale Netz des Überwachungssystems für die Detektion beider Angriffsarten trainiert worden sein. Alternativ oder zusätzlich ist es möglich, dass der physikalische Angriff in der Form eines physikalischen Eingriffs auf das eingebettete System detektiert wird.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer und/oder das eingebettete System vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm umfasst. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: Ein neuronales Netz eines Überwachungssystems zur Erkennung von Seitenkanal- und Fehlerinjektionsangriffen gemäß Ausführungsbeispielen der Erfindung.
- Fig. 2: Ein neuronales Netz eines Überwachungssystems zur Korrektur der Netzausgabe und Erkennung von Fehlerinjektionsangriffen gemäß Ausführungsbeispielen der Erfindung.
- Fig. 3: Eine schematische Visualisierung eines Verfahrens, einer Vorrichtung sowie eines Computerprogramms gemäß Ausführungsbeispielen der Erfindung.

In den nachfolgenden Figuren werden für die gleichen technischen Merkmale auch von unterschiedlichen Ausführungsbeispielen die identischen Bezugszeichen verwendet.

Zum Schutz gegen Seitenkanalangriffe sind bereits verschiedene Techniken im Stand der Technik vorgesehen. Verschleierungs- (engl. Hiding) Gegenmaßnahmen haben zum Ziel, den tatsächlichen Stromverbrauch einer integrieren Schaltung (IC) durch Randomisierung im Zeit oder Amplitudenbereich zu verschleiern. Dies kann u. A. durch dynamische Taktfrequenzmodifikation [6], durch eine zufällige Änderung der Ausführungsreihenfolge (sog. Shuffling) oder durch dedizierte Rauschgeneratoren erfolgen [5]. Andere Arten von Gegenmaßnahmen basierend auf Maskierung (engl. Masking) zerlegen den Datenpfad zufällig in mehrere Teile, um den Stromverbrauch unabhängig von den tatsächlich berechneten Daten zu machen. Typischerweise wird dabei jede Variable als n-Tupel repräsentiert, wobei die Summe (oder bitweise XOR-Verknüpfung) der Teile den ursprünglichen Datenwert ergeben (s. [3, 4]).

Für die Erkennung von Bitflips in Speichern und Datenpfaden einer digitalen Hardwareschaltung existieren Ansätze aus dem Bereich der funktionalen Sicherheit als Teil der Absicherung gegen zufällige Hardware-Fehler. Beispielsweise können Teile der Hardware dupliziert und im Lockstep-Verfahren betrieben werden, um solche Fehler zu erkennen. Für den linearen Anteil der DNN-Berechnungen können weiterhin Prüfsummenverfahren eingesetzt werden. Da sich die Erscheinungsbilder von Bitflips, die durch Hardwarefehler auftreten und jenen, die durch Fehlerinjektionsangriffe provoziert werden, ähneln, können diese Methoden auch für Schutz vor physikalischen Angriffen entsprechend eingesetzt werden.

Herkömmliche Gegenmaßnahmen gegen physikalische Angriffe benötigen sehr viel Ressourcen. So steigen z. B. der Flächenverbrauch und die Latenz der in [4] beschriebenen Lösung (Hardware Masking) um mehr als das Doppelte an gegenüber einem ungeschützten DNN Hardware Beschleuniger. Auch sind bekannte Lösungen sehr stark an die Gegebenheiten des eingebetteten DNNs angepasst und daher nicht flexibel mit verschieden DNN-Netzarchitekturen kombinierbar. So können [3, 4] nur auf Binarized Neural Networks (BNNs) angewandt werden. Weiterhin sind herkömmliche Gegenmaßnahmen gegen physikalische Angriffe per se entweder zur Abwehr von Seitenkanalangriffen oder aber zum Schutz vor Fehlerinjektionsangriffen ausgelegt. Dies bedeutet, dass mehrere Gegenmaßnahmen kombiniert werden müssen, um einen umfassenden Schutz vor physikalischen Angriffen sicherzustellen. Dadurch steigt nicht nur der Ressourcenverbrauch weiter an, auch können durch die Kombination unabhängig entwickelter Konzepte ungewollte Nebeneffekte entstehen, die das Gesamtsystem wiederum unsicher machen.

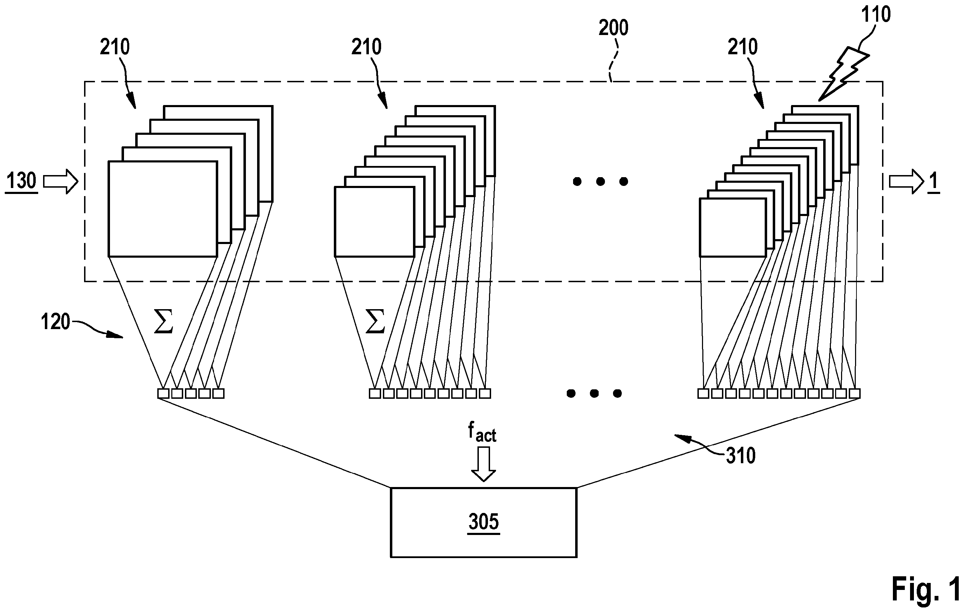

Das gemäß Ausführungsbeispielen der Erfindung vorgeschlagene und in den Fig. 1 bis 3 veranschaulichte Verfahren 100 erlaubt eine ressourcenschonende Erkennung von sowohl Seitenkanal- als auch Fehlerinjektionsangriffen auf eingebettete DNNs. Grundlage kann hierbei ein funktionales System aufweisend ein neuronales Netz 305, nachfolgend zur einfacheren Bezugnahme auch Überwachungssystem 300 bezeichnet, sein. Dieses Überwachungssystem 300 kann parallel zum zu schützenden eingebetteten Maschinenlern-Modell 200 wie einem Klassifikationsnetz, vorzugsweise Bild-Klassifikationsnetz, betrieben werden. Das neuronale Netz 305 des Überwachungssystems 300 kann dabei "kleiner" als das Maschinenlern-Modell 200 sein, also bspw. weniger Gewichte und/oder Schichten aufweisen. Das Überwachungssystem 300 kann als Eingabe Zwischenergebnisse 210 in der Form von Zwischenwerten (sog. Aktivierungswerte) des Maschinenlern-Modells 200 erhalten, um zu erkennen, ob Anomalien und/oder Abweichungen zum Normalbetrieb vorliegen.

Das Überwachungssystem 300 kann auf die in [8, 9] vorgeschlagenen Methoden basieren, allerdings im Gegensatz zu den herkömmlichen Methoden zur Erkennung und Mitigation von physikalischen Angriffen dienen. Im Gegensatz zu bekannten Gegenmaßnahmen-Konzepten vor physikalischen Angriff bietet die gemäß Ausführungsbeispielen der Erfindung beschriebene Lösung eine kombinierte Schutzwirkung gegen Seitenkanal- und Fehlerinjektionsangriffe, ohne dabei die Architektur oder Implementierung des zu schützenden Maschinenlern-Modells 200, vorzugsweise DNNs, anpassen zu müssen.

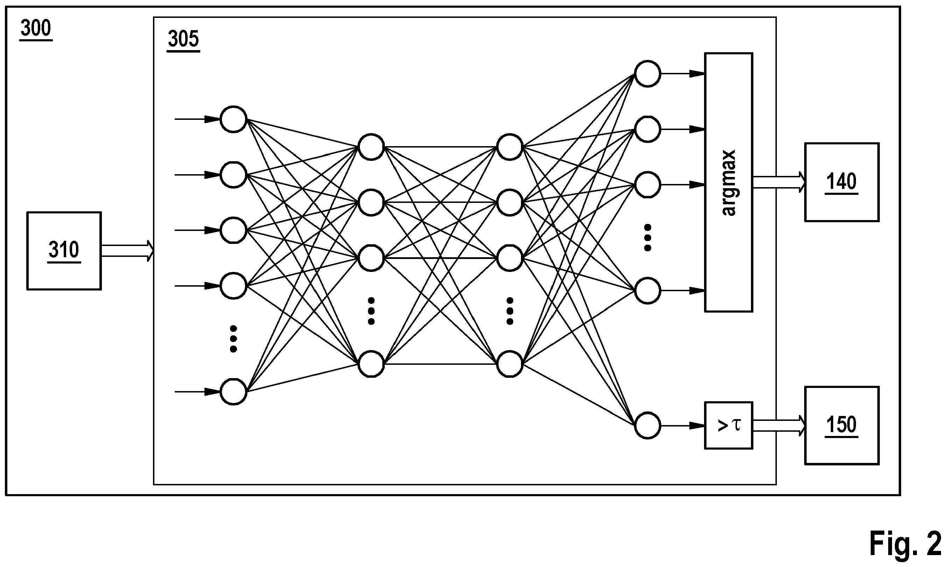

Es ist eine Erfindungsidee, dass parallel zum Maschinenlern-Modell 200 das zweite, deutlich kleinere neuronales Netz 305 des Überwachungssystems 300 verwendet wird, um damit die Operationen des Maschinenlern-Modells 200 zu überwachen. Dabei kann gemäß Fig. 2 basierend auf einem Ergebnis 150 des Detektierens 103 des wenigstens einen physikalischen Angriffs eine Gegenmaßnahme, vorzugsweise eine Beendigung einer Operation des Maschinenlern-Modells 200 und/oder ein Sperren von Eingaben 130 für das Maschinenlern-Modell 200, initiiert werden. Konkret kann bei der Detektion des Angriffs z. B. in der Form eines Seitenkanalangriffs gemäß Ausführungsbeispielen der Erfindung als Gegenmaßnahme ein entsprechender Interrupt geworfen werden, welcher die Operation des Maschinenlern-Modells 200 einstellt. Dadurch hat ein Angreifer danach keine Möglichkeit mehr, Seitenkanalinformationen zu messen welche bspw. zum Reverse Engineering von Gewichten usw. führen können.

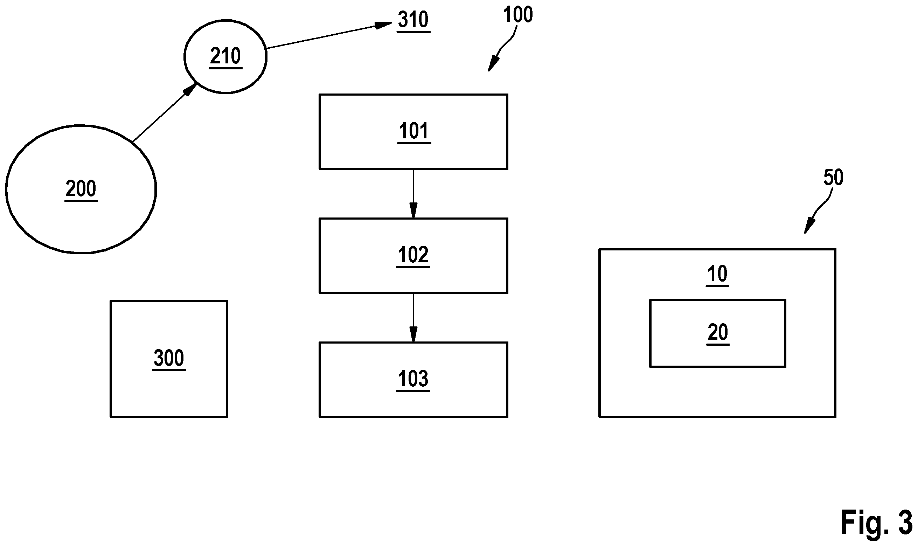

Fehlerinjektionsangriffe führen zu gezielten Bitflips in der Hardware, also insbesondere dem (in Fig. 3 visualisierten) eingebetteten System 50, mit welcher das Maschinenlern-Modell 200 betrieben wird, und Änderungen in den Ausgabedaten. Die Änderungen der Ausgabedaten kann ein Angreifer ausnutzen, um Gewichte zu extrahieren. Das Überwachungssystem 300 kann in der Lage sein, diese Bitflips zu erkennen und zu korrigieren, sodass die Ausgabedaten des zu schützenden Maschinenlern-Modells 200 einem Angreifer keine Informationen für einen Angriff liefern. Der Implementierungsaufwand und somit Ressourcenverbrauch können dabei deutlich geringer sein als bei bekannten Lösungen, da das neuronale Netz 305 des Überwachungssystems 300 um ein Vielfaches kleiner ausfallen kann als das zu schützende Maschinenlern-Modell 200. Des Weiteren ist das Überwachungssystem ggf. nicht auf die Erkennung von physikalischen Angriffen beschränkt, sondern kann gleichzeitig zur Korrektur von zufälligen Fehlern (Safety) und Erkennung anderen Anomalien (z. B. ungewöhnlichen Lichtverhältnissen) im Feldeinsatz verwendet werden. Entsprechend kann gemäß Fig. 2 ein Detektieren eines Fehlers 110, vorzugsweise Bitfehlers, durch das Überwachungssystem 300 bei einer Ausführung des Maschinenlern-Modells 200 vorgesehen sein, wobei eine korrigierte Ausgabe 140 des Maschinenlern-Modells 200 bereitgestellt werden kann.

Ein Überblick über das Verfahren 100 gemäß Ausführungsbeispielen der Erfindung ist in Fig. 1 dargestellt. Auf der Grundlage der Zwischenergebnisse 210 des überwachten Maschinenlern-Modells 200, vorzugsweise DNNs, kann eine Merkmalsaktivierung *f_{act}* berechnet werden, bei der es sich um einen Vektor oder einen mehrdimensionalen Tensor handeln kann. Diese Tensoren können aus einem Eingabebeispiel generiert werden. Im Falle von 2D Filtern (Convolution), welche üblicherweise in DNNs zur Bildklassifizierung verwendet werden, besteht die Ausgabe einer Zwischenschicht (Layer) aus mehreren 2D Feature Maps, die den verschiedenen Filterkernen der Schicht entsprechen. Der Ausdruck "Feature Map" wird im Rahmen der Erfindung auch als Merkmalskarte bezeichnet. Für jede Feature Maps kann ein einzelner Wert an *f_{act}* angehängt werden, indem alle Werte der Feature Map aufsummiert werden. Auf der Grundlage von *f_{act}* kann sodann eine oder gebündelt mehrere Vorhersagen des überwachten Maschinenlern-Modells 200 auf Anomalien und Bitfehler überprüft werden. In anderen Worten kann das weitere Maschinenlern-Modell 200 des Überwachungssystems 300 auch dafür trainiert sein, solche Anomalien und Bitfehler zu erkennen. Dabei kann eine binäre Ausgabe des Überwachungssystems vorgesehen sein, die angibt, ob ein Angriff oder Anomalie im Maschinenlern-Modell 200 erkannt wurde. Auch kann eine skalare Ausgabe des Überwachungssystems vorgesehen sein, z. B. mit einem Wert zwischen 0 und 1, der die Wahrscheinlichkeit für einen detektierten Angriff angibt.

Um die Zuordnung zwischen *f_{act}* und Anomalie bzw. Bitfehler zu erlernen, kann das Überwachungssystem 300 ein maschinelles Lernmodell 305 verwenden, z. B. wiederum ein künstliches neuronales Netz 305 wie ein neuronales Netz mit rekurrenten Strukturen. Im Prinzip kann das Überwachungssystem mit beliebigen ML Algorithmen implementiert werden. Zur Detektion von physikalischen Angriffen eignen sich aber insbesondere neuronale Netze mit rekurrenten Strukturen, sogenannte Recurent Neural Networks (RNNs). Im Gegensatz zu klassischen feedforward Netzwerken besitzen Neuronen in RNNs nicht nur Verbindungen zu Neuronen nachfolgender Schichten, sondern auch Verbindungen zu Neuronen derselben Schicht oder vorheriger Schichten. Dadurch erhält das Netz die Möglichkeit, temporäre Abhängigkeiten zwischen Eingabedaten zu erkennen und auszunutzen. Diese Eigenschaft ist vor allem zu Erkennung von Seitenkanalangriffen nützlich, da ein Angreifer hier in der Regel sehr viele Eingabedaten hintereinander an das Maschinenlern-Modell 200 übergibt.

Typischerweise wird ein Angreifer keine Bilddaten verwenden, mit denen das überwachte Netz ursprünglich trainiert wurde, sondern zufällig verteilte Eingabedaten. Auf diese Weise wird die Entropie zwischen aufeinanderfolgenden Eingabedaten erhöht. Hintergrund ist, dass bei zufälligen Eingabedaten deutlich mehr Register in der Hardware ihren Zustand zwischen zwei aufeinanderfolgenden Eingaben ändern. Dadurch erhöht sich der dynamische Stromverbrauch, was sich günstig auf Seitenkanalangriffe auswirkt. Bei kontinuierlichen Bild- oder Videodaten sind große Anteile aufeinanderfolgender Eingabedaten statisch, wodurch nur sehr wenige Register in der Hardware ihren Zustand ändern und Einfluss auf den dynamischen (datenabhängigen) Stromverbrauch nehmen. Erkennt das Überwachungssystem 300, insbesondere das neuronale Netz 305 des Überwachungssystems 300, nun, dass im überwachten Maschinenlern-Modell 200 Zwischenwerte berechnet werden, die einer Verteilung wie bei zufälligen Eingabedaten bzw. einer anderen Verteilung als bei validen Eingabedaten folgen (z. B. weil ein bestimmter Schwellenwert überschritten wurde), kann das Überwachungssystem 300 den Angriff detektieren und eine Gegenmaßnahme einleiten, bspw. das überwachte Netz 200 für weiter Eingaben sperren, wodurch keine weiteren Seitenkanalinformationen extrahiert werden können. In anderen Worten kann das neuronale Netz 305 des Überwachungssystems 300 dafür trainiert sein, zufällige Eingabedaten des Maschinenlern-Modells 200 zu erkennen, um den Angriff zu detektieren.

Im Fall von Fehlerinjektionsangriffen reichen dem Angreifer schon eine fehlerhafte Ausgabe, um Informationen über Gewichte o. Ä. zu extrahieren. Bei der Detektion eines Bitfehlers wird daher entweder das durch das Überwachungssystem 300 korrigierte Ergebnis als Ausgabedatum verwendet (siehe Fig. 2) oder ein statisch vordefinierter Wert (z. B. alle Ausgaben Null). Eine Voraussetzung für die Erkennung und Korrektur von Bitfehlern kann sein, dass das neuronale Netz 305 des Überwachungssystems 300 mit entsprechenden Feature Activation Traces trainiert wurde (erzeugt z. B. durch simulierte Bitflips) und dass alle Ausgabepfade des überwachten Maschinenlern-Modells 200 auch beim Netz 305 des Überwachungssystems 300 vorhanden sind (zur Ausgabekorrektur). Auch hier kann die Detektionsgenauigkeit erhöht werden, indem z. B. ein RNN zur Erkennung benutzt wird (viele Bitfehler hintereinander bedeutet in diesem Zusammenhang eine höhere Wahrscheinlichkeit für einen Fehlerinjektionsangriff). In anderen Worten kann das neuronale Netz 305 des Überwachungssystems 300 dafür trainiert sein, eine Häufigkeit der Bitfehler bei dem Maschinenlern-Modell 200 auszuwerten, um den Angriff zu detektieren.

Im Unterschied zu herkömmlichen Methoden kann das Überwachungssystem 300 zum Schutz vor physikalischen Angriffen auf Maschinenlern-Modellen 200 wie DNNs angewandt werden (im Gegensatz zu einer Erkennung von zufälligen Hardware-Fehler). Unter Schutz kann dabei ein Erkennen und ggf. ein Abwehren solcher Angriffe verstanden werden. Ferner ist es möglich, dass durch das Überwachungssystem 300 eine Detektion von physikalischen Angriffen mittels mehrerer Feature Activation Traces vorgesehen ist, um die Genauigkeit der Erkennung zu erhöhen. Dazu kann u. A. ein RNN als neuronales Netz des Überwachungssystems 300 verwendet werden. Darüber hinaus kann eine kombinierte Erkennung von Seitenkanal- und Fehlerinjektionsangriffe über verschiedene Ausgaben des Überwachungssystems 300 möglich sein. Hierzu kann das Verfahren gemäß Ausführungsbeispielen der Erfindung die Zwischenausgaben des überwachten Maschinenlern-Modells 200, vorzugsweise eines Aufgaben-DNNs, verwenden, an diesen eine in Fig. 1 visualisierte Dimensionsreduktion 120 durchführen (z. B. Summenbildung) und den dadurch erhaltenen Aktivierungsvektor einem ML-Modell 305 des Überwachungssystems 300 zur Erkennung von Seitenkanal- und/oder Fehlerinjektionsangriffen zuzuführen.

In Fig. 3 sind die Verfahrensschritte eines Verfahrens 100 gemäß Ausführungsbeispielen der Erfindung gezeigt. Das Verfahren dient hierbei zum Schützen eines eingebetteten Maschinenlern-Modells 200 vor wenigstens einem physikalischen Angriff. Eingebettet kann in diesem Zusammenhang bedeuteten, dass das Maschinenlern-Modell 200 durch ein eingebettetes System, also insbesondere einem Prozessor des eingebetteten Systems 50, ausgeführt wird. Hierzu kann das Maschinenlern-Modell 200 (in trainierter Form) fest in das eingebettete System 50 integriert sein, z. B. durch einen nicht explizit dargestellten, unveränderbaren elektronischen Datenspeicher. Gemäß einem ersten Verfahrensschritt 101 kann ein Ermitteln einer Überwachungseingabe 310 vorgesehen sein, wobei die Überwachungseingabe 310 auf wenigstens einem Zwischenergebnis 210 des Maschinenlern-Modells 200 basiert. Sodann kann gemäß einem zweiten Verfahrensschritt 102 ein Auswerten der ermittelten Überwachungseingabe 310 durch ein Überwachungssystem 300 erfolgen. Anschließend kann gemäß einem dritten Verfahrensschritt 103 der wenigstens eine physikalische Angriff auf Basis des Auswertens 102 detektiert werden.

Es ist in Fig. 1 und 2 dargestellt, dass das Überwachungssystem 300 ein weiteres Maschinenlern-Modell 305 aufweisen kann, welches das Auswerten 102 der ermittelten Überwachungseingabe 310 durchführt. Das Maschinenlern-Modell 200 kann als ein neuronales Netz ausgeführt ist, vorzugsweise als ein tiefes neuronales Netz, bevorzugt trainiert für eine sicherheitskritische Anwendung bei einem nicht explizit dargestellten Fahrzeug. Ferner kann das wenigstens eine Zwischenergebnis 210, wie in Fig. 1 visualisiert, zumindest eine Ausgabe einer Zwischenschicht des neuronalen Netzes umfasst, wobei das Ermitteln 101 der Überwachungseingabe 310 ein Bestimmen einer Merkmalsaktivierung *f_{act}*, vorzugsweise in der Form eines Aktivierungsvektors umfasst. Die Merkmalsaktivierung *f_{act}*kann durch eine Dimensionsreduktion 120 der zumindest einen Ausgabe bestimmt werden.

Ferner ist in Fig. 1 schematisch ein Computerprogramm 20 sowie eine Vorrichtung 10 zur Datenverarbeitung gemäß Ausführungsbeispielen der Erfindung gezeigt. Die Vorrichtung 10 kann z. B. als das eingebettete System 50 ausgeführt sein.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Referenzen:

[1] Lejla Batina, Shivam Bhasin, Dirmanto Jap, and Stjepan Picek. Csi neural network: Using side-channels to recover your artificial neural network information. Cryptology ePrint Archive, Report 2018/477, 2018. https://ia.cr/2018/477.
[2] Jakub Breier, Dirmanto Jap, Xiaolu Hou, Shivam Bhasin, and Yang Liu. Sniff: Reverse engineering of neural networks with fault attacks. IEEE Transactions on Reliability, pages 1-13, 2021.
[3] Anuj Dubey, Rosario Cammarota, and Aydin Aysu. Bomanet: Boolean masking of an entire neural net-work. In Proceedings of the 39th International Conference on Computer-Aided Design, ICCAD '20, New York, NY, USA, 2020. Association for Computing Machinery.
[4] Anuj Dubey, Rosario Cammarota, and Aydin Aysu. Maskednet: The first hardware inference engine aiming power side-channel protection. In 2020 IEEE International Symposium on Hardware Oriented Security and Trust (HOST), pages 197-208, 2020.
[5] I. Frieslaar and B. Irwin. Developing an electromagnetic noise generator to protect a raspberry pi from side channel analysis. SAIEE Africa Research Journal, 109(2):85-101, 2018.
[6] Benjamin Hettwer, Kallyan Das, Sebastien Leger, Stefan Gehrer, and Tim Güneysu. Lightweight sidechannel protection using dynamic clock randomization. In 2020 30th International Conference on Field-Programmable Logic and Applications (FPL), pages 200-207, 2020.
[7] Stefan Mangard, Elisabeth Oswald, and Thomas Popp. Power Analysis Attacks: Revealing the Secrets of Smart Cards. Springer Publishing Company, Incorporated, 1st edition, 2010.
[8] Christoph Schorn and Lydia Gauerhof. Facer: A universal framework for detecting anomalous operation of deep neural networks. In 2020 IEEE 23rd International Conference on Intelligent Transportation Systems (ITSC), pages 1-6, 2020.
[9] Christoph Schorn, Andre Guntoro, and Gerd Ascheid. Efficient on-line error detection and mitigation for deep neural network accelerators. In Barbara Gallina, Amund Skavhaug, and Friedemann Bitsch, editors, Computer Safety, Reliability, and Security, pages 205-219, Cham, 2018. Springer International Publishing.

## Patentansprüche

1. Verfahren (100) zum Schützen eines eingebetteten Maschinenlern-Modells (200) vor wenigstens einem physikalischen Angriff, umfassend:
- Ermitteln (101) einer Überwachungseingabe (310), wobei die Überwachungseingabe (310) auf wenigstens einem Zwischenergebnis (210) des Maschinenlern-Modells (200) basiert,
- Auswerten (102) der ermittelten Überwachungseingabe (310) durch ein Überwachungssystem (300),
- Detektieren (103) des wenigstens einen physikalischen Angriffs auf Basis des Auswertens (102).

2. Verfahren (100) nach Anspruch 1,
**dadurch gekennzeichnet,**
**dass** das Überwachungssystem (300) ein weiteres Maschinenlern-Modell (305) aufweist, welches das Auswerten (102) der ermittelten Überwachungseingabe (310) durchführt, wobei vorzugsweise das weitere Maschinenlern-Modell (305) als ein eingebettetes, neuronales Netz ausgeführt ist, und bevorzugt rekurrente Strukturen aufweist, wobei das weitere Maschinenlern-Modell (305) besonders bevorzugt weniger Neuronen aufweist als das zu schützende eingebettete Maschinenlern-Modell (200).

3. Verfahren (100) nach einem der vorhergehenden Ansprüche,
**dadurch gekennzeichnet,**
**dass** das Maschinenlern-Modell (200) als ein neuronales Netz ausgeführt ist, vorzugsweise als ein tiefes neuronales Netz.

4. Verfahren (100) nach Anspruch 3,
**dadurch gekennzeichnet,**
**dass** das wenigstens eine Zwischenergebnis (210) zumindest eine Ausgabe einer Zwischenschicht des neuronalen Netzes umfasst, wobei das Ermitteln (101) der Überwachungseingabe (310) den nachfolgenden Schritt umfasst:
- Bestimmen einer Merkmalsaktivierung (f_{act}), vorzugsweise in der Form eines Aktivierungsvektors, wobei die Merkmalsaktivierung (f_{act}) durch eine Dimensionsreduktion (120), bevorzugt Summenbildung, der zumindest einen Ausgabe bestimmt wird,
wobei die Merkmalsaktivierung (f_{act}) als Eingabe für ein weiteres Maschinenlern-Modell (305) des Überwachungssystems (300) verwendet wird.

5. Verfahren (100) nach Anspruch 4,
**dadurch gekennzeichnet,**
**dass** die jeweilige Ausgabe der Zwischenschicht mehrere Merkmalskarten umfasst, wobei die Dimensionsreduktion (120) für die jeweilige Ausgabe den nachfolgenden Schritt umfasst:
- Berechnen eines Wertes, vorzugsweise Summenwertes, für jede der Merkmalskarten, welcher für die gesamte jeweilige Merkmalskarte spezifisch ist,
wobei die Merkmalsaktivierung (f_{act}) die berechneten Werte umfasst.

6. Verfahren (100) nach einem der vorhergehenden Ansprüche,
**dadurch gekennzeichnet,**
**dass** ferner wenigstens einer der nachfolgenden Schritte vorgesehen ist:
- Detektieren eines Fehlers (110), vorzugsweise Bitfehlers, bei einer Ausführung des Maschinenlern-Modells (200) auf Basis des Auswertens (102), wobei besonders bevorzugt eine korrigierte Ausgabe (140) des Maschinenlern-Modells (200) bereitgestellt wird,
- Detektieren einer Anomalie bei der Ausführung des Maschinenlern-Modells (200) auf Basis des Auswertens (102).

7. Verfahren (100) nach einem der vorhergehenden Ansprüche,
**dadurch gekennzeichnet,**
**dass** basierend auf einem Ergebnis (150) des Detektierens (103) des wenigstens einen physikalischen Angriffs eine Gegenmaßnahme, vorzugsweise eine Beendigung einer Operation des Maschinenlern-Modells (200) und/oder ein Sperren von Eingaben (130) für das Maschinenlern-Modell (200), initiiert wird.

8. Verfahren (100) nach einem der vorhergehenden Ansprüche,
**dadurch gekennzeichnet,**
**dass** der wenigstens eine physikalische Angriff sowohl in der Form eines Seitenkanalangriffs als auch in der Form eines Fehlerinjektionsangriffs auf ein eingebettetes System (50) detektiert wird, wobei auf dem eingebetteten System (50) das Maschinenlern-Modell (200) und vorzugsweise auch das Überwachungssystem (300) ausgeführt werden.

9. Verfahren (100) nach einem der vorhergehenden Ansprüche,
**dadurch gekennzeichnet,**
**dass** der physikalische Angriff in der Form eines physikalischen Eingriffs auf ein eingebettetes System (50) detektiert wird, wobei auf dem eingebetteten System (50) das Maschinenlern-Modell (200) und vorzugsweise auch das Überwachungssystem (300) ausgeführt werden.

10. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

11. Vorrichtung (10) zur Datenverarbeitung, die eingerichtet ist, das Verfahren (100) nach einem der Ansprüche 1 bis 9 auszuführen.

## Geänderte Patentansprüche

### Geänderte Patentansprüche gemäss Regel 137(2) EPÜ.

1. Verfahren (100) zum Schützen eines eingebetteten Maschinenlern-Modells (200) vor wenigstens einem physikalischen Angriff, umfassend:
- Ermitteln (101) einer Überwachungseingabe (310), wobei die Überwachungseingabe (310) auf wenigstens einem Zwischenergebnis (210) des Maschinenlern-Modells (200) basiert,
- Auswerten (102) der ermittelten Überwachungseingabe (310) durch ein Überwachungssystem (300),
- Detektieren (103) des wenigstens einen physikalischen Angriffs auf Basis des Auswertens (102),
wobei das Überwachungssystem (300) ein weiteres Maschinenlern-Modell (305) aufweist, welches das Auswerten (102) der ermittelten Überwachungseingabe (310) durchführt, wobei das weitere Maschinenlern-Modell (305) weniger Neuronen aufweist als das zu schützende eingebettete Maschinenlern-Modell (200).

2. Verfahren (100) nach Anspruch 1,
**dadurch gekennzeichnet,**
**dass** das weitere Maschinenlern-Modell (305) als ein eingebettetes, neuronales Netz ausgeführt ist, und bevorzugt rekurrente Strukturen aufweist.

3. Verfahren (100) nach einem der vorhergehenden Ansprüche,
**dadurch gekennzeichnet,**
**dass** das Maschinenlern-Modell (200) als ein neuronales Netz ausgeführt ist, vorzugsweise als ein tiefes neuronales Netz.

4. Verfahren (100) nach Anspruch 3,
**dadurch gekennzeichnet,**
**dass** das wenigstens eine Zwischenergebnis (210) zumindest eine Ausgabe einer Zwischenschicht des neuronalen Netzes umfasst, wobei das Ermitteln (101) der Überwachungseingabe (310) den nachfolgenden Schritt umfasst:
- Bestimmen einer Merkmalsaktivierung (f_{act}), vorzugsweise in der Form eines Aktivierungsvektors, wobei die Merkmalsaktivierung (f_{act}) durch eine Dimensionsreduktion (120), bevorzugt Summenbildung, der zumindest einen Ausgabe bestimmt wird,
wobei die Merkmalsaktivierung (f_{act}) als Eingabe für ein weiteres Maschinenlern-Modell (305) des Überwachungssystems (300) verwendet wird.

5. Verfahren (100) nach Anspruch 4,
**dadurch gekennzeichnet,**
**dass** die jeweilige Ausgabe der Zwischenschicht mehrere Merkmalskarten umfasst, wobei die Dimensionsreduktion (120) für die jeweilige Ausgabe den nachfolgenden Schritt umfasst:
- Berechnen eines Wertes, vorzugsweise Summenwertes, für jede der Merkmalskarten, welcher für die gesamte jeweilige Merkmalskarte spezifisch ist, wobei die Merkmalsaktivierung (f_{act}) die berechneten Werte umfasst.

6. Verfahren (100) nach einem der vorhergehenden Ansprüche,
**dadurch gekennzeichnet,**
**dass** ferner wenigstens einer der nachfolgenden Schritte vorgesehen ist:
- Detektieren eines Fehlers (110), vorzugsweise Bitfehlers, bei einer Ausführung des Maschinenlern-Modells (200) auf Basis des Auswertens (102), wobei besonders bevorzugt eine korrigierte Ausgabe (140) des Maschinenlern-Modells (200) bereitgestellt wird,
- Detektieren einer Anomalie bei der Ausführung des Maschinenlern-Modells (200) auf Basis des Auswertens (102).

7. Verfahren (100) nach einem der vorhergehenden Ansprüche,
**dadurch gekennzeichnet,**
**dass** basierend auf einem Ergebnis (150) des Detektierens (103) des wenigstens einen physikalischen Angriffs eine Gegenmaßnahme, vorzugsweise eine Beendigung einer Operation des Maschinenlern-Modells (200) und/oder ein Sperren von Eingaben (130) für das Maschinenlern-Modell (200), initiiert wird.

8. Verfahren (100) nach einem der vorhergehenden Ansprüche,
**dadurch gekennzeichnet,**
**dass** der wenigstens eine physikalische Angriff sowohl in der Form eines Seitenkanalangriffs als auch in der Form eines Fehlerinjektionsangriffs auf ein eingebettetes System (50) detektiert wird, wobei auf dem eingebetteten System (50) das Maschinenlern-Modell (200) und vorzugsweise auch das Überwachungssystem (300) ausgeführt werden.

9. Verfahren (100) nach einem der vorhergehenden Ansprüche,
**dadurch gekennzeichnet,**
**dass** der physikalische Angriff in der Form eines physikalischen Eingriffs auf ein eingebettetes System (50) detektiert wird, wobei auf dem eingebetteten System (50) das Maschinenlern-Modell (200) und vorzugsweise auch das Überwachungssystem (300) ausgeführt werden.

10. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

11. Vorrichtung (10) zur Datenverarbeitung, die eingerichtet ist, das Verfahren (100) nach einem der Ansprüche 1 bis 9 auszuführen.
